# EUROPÄISCHE PATENTSCHRIFT

(11) **EP 1 462 706 B1**
(45) Veröffentlichungstag und Bekanntmachung des Hinweises auf die Patenterteilung: **06.09.2006**
(21) Anmeldenummer: 04006099.8
(22) Anmeldetag: 15.03.2004
(51) Int. Cl.: F16L 53/00, E04G 15/06, H02G 3/22

(54) **Futterrohr zur Rohrdurchführung**
Casing tube for a pipe lead through
Tubage pour le passage d'une conduite

(30) Priorität: 25.03.2003 DE 10313305
(43) Veröffentlichungstag der Anmeldung: 29.09.2004
(73) Patentinhaber: Poloplast GmbH & Co. KG, 4060 Leonding (AT)
(72) Erfinder: Paier, Thomas, 3352 St. Peter in der Au (AT)
(74) Vertreter: Weber, Joachim

(56) Entgegenhaltungen:
- EP-A- 0 160 924
- EP-A- 0 583 503
- CH-A- 673 329
- DE-A- 3 114 464
- DE-A- 3 629 140
- DE-C- 4 427 603
- DE-U- 20 120 639
- US-A- 4 951 914
- US-A- 5 979 908

## Beschreibung

Die Erfindung bezieht sich auf ein Futterrohr zur Rohrdurchführung durch eine Betonwand gemäß Anspruch 1.

Futterrohre sind aus dem Stand der Technik bekannt. Sie werden verwendet, um innerhalb einer Mauer bzw. Schalung so eingebaut zu werden, dass sich im fertigen Zustand eine Rohrdurchführung ergibt. Zwischen dem durchzuführenden, später abzudichtenden Rohr und dem Futterrohr wird nachfolgend eine Dichtung, bevorzugter Weise eine Quetschdichtung, eingebaut.

Bekannte Futterrohre werden insbesondere bei der Herstellung von Beton-Wänden eingesetzt, um passgenaue Ausnehmungen in einer Betonwand zu erzeugen. Als Alternative hierzu müsste eine Kernbohrung eingebracht werden, die aufwendig und kostenintensiv ist. Die andere Möglichkeit bestünde darin, eine größer dimensionierte Ausnehmung durch Einlegen eines Kerns, beispielsweise aus Styropor, zu erzeugen und in diese nachträglich ein Futterrohr einzubauen. Auch diese Vorgehensweise scheidet aus Kostengründen und aus Praktikabilitätsgründen vielfach aus.

Bei dem Einbau eines Futterrohres in ein Mauerwerk, insbesondere in eine zu betonierende Wand oder Betonwand, ergibt sich primär das Problem der Dichtigkeit. Dabei ist zu vermeiden, dass sich zwischen der Außenwandung des Futterrohres und dem Beton bei dessen Abbindung ein Spalt bildet, durch welchen beispielsweise Grundwasser eindringen kann.

Der Stand der Technik beschreibt deshalb Futterrohre mit umlaufenden Lamellen. Diese sollen die wirksame Oberfläche vergrößern und dadurch die Dichtigkeit zum Beton gewährleisten. Im Vergleich zu einem glatten Rohr stellt dies möglicherweise eine Verbesserung dar. Es hat sich jedoch gezeigt, dass die bekannten Lamellen, die als axiale Ringlamellen oder Ringrippen ausgestaltet sind, nicht die gewünschte Dichtigkeit bringen. Der Grund hierfür besteht darin, dass der Beton keine Verbindung mit dem Futterrohr eingeht und somit stets mit einem gewissen Spalt aufliegt. Das Problem der Spaltbildung ergibt sich durch die Wärmeausdehnung beim Abbinden des Betons und bei dessen anschließendem Abkühlen. Da Beton und Grundstoff des Futterrohres unterschiedliche Wärmeausdehnungskoeffizienten haben, besteht das Problem der Spaltbildung.

Ein weiteres Problem hinsichtlich der Undichtigkeit besteht bei der Erzeugung einer Betonwand selbst. Da das Futterrohr zwischen zwei Schalungsplatten eingesetzt werden muss, ist es erforderlich, dass die beiden Endbereiche des Futterrohres gut gegen die Schalungsplatten anliegen. Ist dies nicht der Fall, so kann das Futterrohr durch den Betondruck beim Gießen des Betons ausweichen oder aus seiner Lage gebracht werden und im ungünstigsten Fall sogar im Mauerwerk verloren gehen. Weiterhin besteht der Nachteil, dass Beton oder Betonmilch an den Stirnseiten des Futterrohres in dieses eindringen können und dieses verschmutzen. Um eine anschließende saubere Abdichtung eines Quetschflansches zu erzielen, sind aufwendige Nacharbeiten und Reinigungsschritte erforderlich.

Die Druckschrift DE 44 27 603 C bezieht sich auf eine Vorrichtung zum Abdichten von Rohrleitungen, bei welcher eine Rohrmanschette mit Ankerrippen versehen ist, welche Hinterschneidungen aufweisen.

Aus dem deutschen Gebrauchsmuster DE 201 20 639 U1 ist eine Vorrichtung zum Abdichten von Rohren in Form einer auf das Rohr aufziehbaren Manschette vorbekannt, wobei die Manschette ebenfalls mit hinterschnittenen Rippen versehen ist.

Eine ähnliche Konstruktion zeigt die DE 31 14 464 A1, wobei auch hier hinterschnittene Rippen vorgesehen sind.

Eine weitere Futterrohr-Konstruktion ist aus der EP 0 583 503 A1 bekannt. Hierbei weisen Ringwülste jedoch keine Hinterschneidungen auf.

Die US 4 951 914 A zeigt einzelne Futterrohr-Ringelemente, welche jeweils hinterschnittene Halterippen haben. Die einzelnen Ringelemente können in Abhängigkeit von der Wanddicke miteinander kombiniert werden. Eine elastische axiale Verformbarkeit ist nicht vorgesehen.

Eine weitere Abdichtung für eine Rohrdurchführung ist aus der CH 673 329 A vorbekannt. Hierbei ist eine axiale Einstellbarkeit durch eine Verschraubung möglich, eine elastische axiale Verformbarkeit ist nicht vorgesehen.

Die gattungsbildende EP 0 160 924 A zeigt eine ähnliche Konstruktion wie die oben genannten EP 0 583 503 A.

Aus der US 5 979 908 A ist eine Rohrdichtung vorbekannt, welche ein ringförmiges Dichtungselement aufweist, das in ein Mauerwerk einbettbar ist.

Die deutsche Offenlegungsschrift DE 36 29 140 A beschreibt eine Konstruktion für eine Wanddurchführung für Rohre, Kabel oder Leitungen. Hierbei sind als äußere Endstücke Hohlkörper vorgesehen, die an die Wand angesetzt werden. In dem konischen Hohlraum zwischen den beiden Hohlkörpern ist eine dauerelastische oder dauerplastische Masse eingebracht. Es erfolgt somit nicht eine Verankerung im Mauerwerk, sondern lediglich eine elastische Halterung.

Der Erfindung liegt die Aufgabe zugrunde, ein Futterrohr der eingangs genannten Art zu schaffen, mit dem der Spaltbildung beim Einbringen des Betons entgegengewirkt und eine Erhöhung der Dichtigkeit des Futterrohrs gegenüber dem Beton erreicht werden kann und welches selbsttätig an Ungenauigkeiten der Schalung z.B. auch im Hinblick auf den Abstand der Schalung anpassbar ist.

Erfindungsgemäß wird die Aufgabe durch die Merkmale des Hauptanspruchs gelöst, die Unteransprüche zeigen weitere vorteilhafte Ausgestaltungen der Erfindung.

Das erfindungsgemäße Futterrohr zeichnet sich durch eine Reihe erheblicher Vorteile aus.

Bei der Erfindung ist zur Lösung der Dichtigkeit vorgesehen, dass zumindest ein Teilbereich des Basisrohrs in seiner Axialrichtung elastisch verformbar ist. Die elastische Verformbarkeit wird bevorzugter Weise durch eine balgartige oder tellerfederartige Ausgestaltung erreicht.

Durch die elastische Verformbarkeit in Axialrichtung wirkt das erfindungsgemäße Futterrohr insbesondere thermisch bedingten Längenänderungen oder Volumenänderungen beim Abbinden des Betons entgegen. Hierdurch wird das Betonmaterial der Wand zusätzlich gegen das Futterrohr, insbesondere dessen elastischen Bereich, gedrückt. Dies wiederum erhöht die Flächenpressung und wirkt einer Spaltbildung entgegen. Hierdurch ergibt sich die beschriebene erfindungsgemäße Dichtwirkung.

Durch die Verwendung eines elastisch verformbaren, ähnlich einem Federelement wirkenden Bereichs des Futterrohrs reagiert dieses auch beim Einbau wesentlich unempfindlicher auf Ungenauigkeiten, beispielsweise des Abstandes der Schalbretter. Insgesamt ist das Futterrohr robuster. Hierdurch ergibt sich eine verbesserte Lagestabilität, die zusätzlich auch zu einer verbesserten stirnseitigen Dichtheit zur Schalwand beiträgt. Die hierbei erforderliche, zum Vorspannen des elastischen Teilbereichs des Basisrohrs benötigte Kraft wirkt sich nicht auf den Arbeitsablauf an einer Baustelle aus, da üblicherweise Schaltafeln verspannt werden.

Besonders günstig ist es, wenn bei einem erfindungsgemäßen Futterrohr Vorspannkräfte von ca. 1000 N bei einem Verformungsweg von ca. 5 mm aufgebracht werden.

Bei Verwendung einer tellerfederartigen Ausgestaltung ergibt sich der Vorteil, dass ein progressiver Kraftverlauf eingestellt werden kann, welcher zu einer gleichmäßigen Vorspannung über den zu verspannenden Weg beiträgt. Eine derartige Vorspannung ist ab einem gewissen Federweg wegunabhängig. Hierdurch ergibt sich ein hohes Maß an Dichtwirkung.

Durch die Hinterschneidung der Lamelle ergibt sich ein "Aufschrumpfen" des Futterrohres am Beton. Durch die volumenmäßige Schrumpfung des Betons wird dieser besonders intensiv die Hinterschneidung ausfüllen, so dass dort eine Spaltbildung verhindert wird.

Bei der Erfindung ist vorgesehen, dass die Hinterschneidung durch eine Schrägstellung der Lamellen, bezogen auf eine senkrecht zur Längsachse des Futterrohrs angeordnete Ebene, gebildet ist. Durch die eine oder mehreren schrägen Lamellen wird das Zusammenziehen des Betons in Axialrichtung und/oder in Umfangsrichtung verhindert bzw. durch die Lamellen teilweise blockiert. Hierdurch ergibt sich eine zusätzliche Flächenpressung, welche die gewünschte Dichtwirkung hervorruft.

Besonders günstig kann auch eine gezielte Werkstoffauswahl für das Futterrohr sein. Durch den Einsatz eines Werkstoffes, der mit dem Zement des Betons beim Abbinden reagiert, kann die Affinität zwischen dem Futterrohr und dem Beton gesteigert werden. Dies führt zu einer weiteren verbesserten Dichtigkeit.

Als Material für das Futterrohr bietet sich vorzugsweise PP als Trägermaterial mit Kreide, Gips, Zement oder anderen mit Zement reagierenden Füll- und Verstärkungsstoffen an. Der Füllgrad ist bevorzugter Weise größer als 10 vol%.

In einer besonders günstigen Ausgestaltung der Erfindung ist vorgesehen, dass die Schrägstellung der Lamellen in einem Winkel von 5° erfolgt, wobei Winkel zwischen 1° und 10° einen günstigen Bereich definieren. Hierbei kann der Winkel auch deutlich größer sein.

Im Folgenden wird die Erfindung anhand eines Ausführungsbeispiels in Verbindung mit der Zeichnung beschrieben. Dabei zeigt:
- Fig. 1: eine schematische Seitenansicht eines Ausführungsbeispiels eines erfindungsgemäßen Futterrohrs,
- Fig. 2: eine Schnittansicht längs der Linie A-A von Fig. 1,
- Fig. 3: eine vergrößerte Ansicht des Details III von Fig. 2, und
- Fig. 4: eine vergrößerte Ansicht des Details IV von Fig. 2.

Das erfindungsgemäße Futterrohr umfasst ein im Wesentlichen zylindrisches Basisrohr 1, an dessen Umfang mehrere sich axial erstreckende, umlaufende Lamellen oder Ringrippen ausgebildet sind.

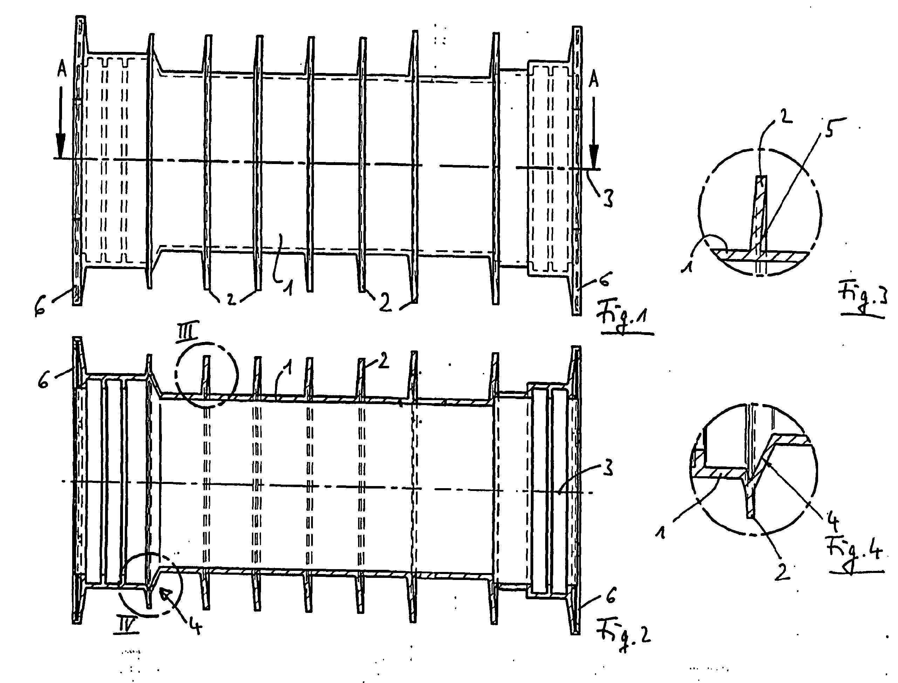

Die Lamellen 2 sind, bezogen auf eine (nicht dargestellte) Ebene, die senkrecht zu einer Längsachse 3 des Futterrohrs angeordnet ist, schräggestellt, so wie dies aus dem Detail der Fig. 3 ersichtlich ist. Hierdurch ergibt sich eine Hinterschneidung 5 (siehe ebenfalls Fig. 3). Die Schrägstellung kann beispielsweise in einem Winkel von 5° erfolgen.

Erfindungsgemäß ist es nicht erforderlich, dass sich die Lamellen um den gesamten Umfang des Basisrohrs 1 erstrecken. Sie können auch nur über einen Teil des Umfangs verlaufen und auch in Form von Zinken oder Ähnlichem ausgebildet sein.

Die Fig. 4 zeigt in vergrößerter Darstellung einen elastischen Teilbereich 4, welcher durch eine tellerfederartige Ausgestaltung der Wandung des Basisrohrs 1 gebildet wird. Hierdurch ist eine Axialverschieblichkeit des Futterrohrs möglich, welche ebenfalls zu einer axialen Vorspannung führt und einer Spaltbildung beim Abbinden des Betons entgegenwirkt.

Die Darstellung der Fig. 1 und 2 zeigt, dass jeweils am Endbereich des Futterrohrs eine Flanschplatte 6 vorgesehen ist, welche der Befestigung an Schalungsplatten oder Schalungstafeln dient. Die Flanschplatte 6 kann mit Nagelöffnungen versehen sein (nicht gezeigt). Wie sich insbesondere aus der Darstellung der Fig. 2 ergibt, kann die jeweilige Flanschplatte 6 selbst in axialer Richtung elastisch verformbar sein, um eine zusätzliche Dichtwirkung hervorzurufen.

Die jeweiligen Endbereiche des Futterrohrs können vergrößert ausgebildet und mit Nuten versehen sein, um im Einzelnen nicht dargestellte Dichtungselemente oder Ähnliches für weitere Rohrstutzen oder weitere Anbauteile aufzunehmen. Derartige Konstruktionen sind aus dem Stand der Technik bekannt.

### Bezugszeichenliste

- 1: Basisrohr
- 2: Lamelle
- 3: Längsachse
- 4: Elastischer Teilbereich
- 5: Hinterschneidung
- 6: Flanschplatte

## Patentansprüche

1. Futterrohr zur Rohrdurchführung mit einem im Wesentlichen zylindrischen Basisrohr (1), welches mit mehreren umlaufenden, sich axial erstreckenden Lamellen (2) versehen ist, wobei zumindest ein Teilbereich (4) des Basisrohrs (1) balgartig ausgestaltet und in seiner Axialrichtung elastisch verformbar ist, **dadurch gekennzeichnet, dass** zumindest ein Teilbereich (4) des Basisrohrs (1) mit einem schräggestellten Wandungsbereich in Form einer Tellerfeder versehen ist und dass zumindest eine Lamelle (2) zumindest über einen Teil ihres Umfangs mit einer Hinterschneidung versehen ist, welche durch Schrägstellung der Lamelle (2), bezogen auf eine senkrecht zur Längsachse des Futterrohrs angeordnete Ebene, gebildet ist.

2. Futterrohr nach Anspruch 1, **dadurch gekennzeichnet, dass** die Schrägstellung in einem Winkel von 5° erfolgt.

3. Futterrohr nach Anspruch 1 oder 2, **dadurch gekennzeichnet, dass** es aus einem thermoplastischen Material, welches mindestens 10 Vol% Füll- oder Verstärkungsstoff aufweist, hergestellt ist.

4. Futterrohr nach einem der Ansprüche 1 bis 3, **dadurch gekennzeichnet, dass** es mit einer die Affinität zum Beton verbessernden Schicht versehen ist.

## Claims

1. Casing tube for the passage of a pipe, having a substantially cylindrical base tube (1) which is provided with a plurality of circumferential fins (2) extending axially, at least part (4) of the base tube (1) being of bellows-like construction and being elastically deformable in its axial direction, **characterised in that** at least part (4) of the base tube (1) is provided with an inclined wall portion in the form of a plate spring and **in that** at least one fin (2) is provided, over at least part of its circumference, with an undercut which is formed by the inclined position of the fin (2), relative to a plane disposed perpendicularly to the longitudinal axis of the casing tube.

2. Casing tube according to claim 1, **characterised in that** the inclined position is at an angle of 5°.

3. Casing tube according to claim 1 or 2, **characterised in that** it is made from a thermoplastic material which comprises at least 10% by volume of filler or reinforcing material.

4. Casing tube according to one of claims 1 to 3, **characterised in that** it is provided with a layer which improves its affinity for concrete.

## Revendications

1. Tube protecteur pour le passage d'une conduite, comprenant un tube de base (1) sensiblement cylindrique, pourvu de plusieurs lamelles (2) circonférentielles s'étendant axialement, au moins une zone partielle (4) du tube de base (1) présentant une forme de soufflet et étant élastiquement déformable dans sa direction axiale, **caractérisé en ce qu'**au moins une zone partielle (4) du tube de base (1) est pourvue d'une zone de paroi inclinée se présentant sous la forme d'une rondelle-ressort, et **en ce qu'**au moins une lamelle (2), au moins sur une partie de sa circonférence, est pourvue d'une contre-dépouille formée par l'inclinaison de la lamelle (2) par rapport à un plan perpendiculaire à l'axe longitudinal du tube protecteur.

2. Tube protecteur selon la revendication 1, **caractérisé en ce que** l'inclinaison présente un angle de 5°.

3. Tube protecteur selon la revendication 1 ou 2, **caractérisé en ce qu'**il est fabriqué dans un matériau thermoplastique présentant au moins 10 % en volume de matière de remplissage ou de renforcement.

4. Tube protecteur selon l'une des revendications 1 à 3, **caractérisé en ce qu'**il est revêtu d'une couche améliorant l'affinité vis-à-vis du béton.
